# EUROPÄISCHE PATENTANMELDUNG

(11) **EP 1 241 777 A2**
(43) Veröffentlichungstag der Anmeldung: **18.09.2002**
(21) Anmeldenummer: 02004069.7
(22) Anmeldetag: 23.02.2002
(51) Int. Cl.: H02M 3/335

(54) **Schaltender Spannungsumformer**

(30) Priorität: 13.03.2001 DE 10111912
(71) Anmelder: Semikron Elektronik GmbH, D-90253 Nürnberg (DE)
(72) Erfinder: Zametzky, Klaus, 91126 Schwabach (DE)

(57) **Zusammenfassung**

Die Erfindung betrifft schaltende Spannungsumformer in Halbbrückentopologie mit konstantem Wert der Verriegelungszeit zwischen den beiden Leistungsschaltern in TOP- 2 bzw. BOT- Position 3 und einer Ansteuerung, wobei der TOP- Schalter 2 durch einen oder mehrere parallel geschaltete N- Kanal Transistoren realisiert ist, der BOT- Schalter 3 durch einen oder mehrere parallel geschaltete P- Kanal Transistoren realisiert ist, beide Leistungsschalter durch einen Gate- Treiber 1 angesteuert werden sowie das Bezugspotenzial des Gate- Treibers 1 sich auf dem Potenzial des Ausgangssignals Uout der Halbbrücke befindet. Der Treiber 1 wird durch eine schaltsignalerzeugende Einheit 4 angesteuert, die sich auf gleichem BezugsPotenzial wie der Treiber 1 befindet, Einheit 4 und Treiber 1 können direkt miteinander verbunden werden.

## Beschreibung

Die Erfindung betrifft schaltende Spannungsumformer, wie Spannungswandler oder Stromrichter in Halbbrückentopologie. Das generelle Arbeitsprinzip derartiger schaltender Spannungsumformer basiert auf einer zugeführten Primärspannung, die durch vorzugsweise elektronische Schalter zerhackt wird, um eine gewünschte Wechselspannung zu erhalten. Diese Wechselspannung wird anschließend in einem Transformator und/oder einem Filter und/oder einem Gleichrichter geeignet weiterverarbeitet um eine Ausgangsspannung gewünschter Form und mit gewünschten Eigenschaften zu erhalten.

Zum Stand der Technik zählen verschiedene Wandlerprinzipien, die nach dem PWM-(Pulsweitenmodulation-) Verfahren arbeiten, diese sind beispielhaft in Tietze / Schenk, Kap. 18 (ISBN3-540-19475-4, 9. Auflage) ausführlich beschrieben. Bei derartigen Wandlern in Halbbrückentopologie, die einen Transformator speisen, wird die Verriegelungszeit zwischen dem Leistungsschalter, typischerweise N- Kanal- Transistoren, in TOP- sowie jenem in BOT- Position variiert und somit das Tastverhältnis der zerhackten Wechselspannung geeignet beeinflußt. Somit ergibt sich am Ausgang des Wandlers eine Spannung bzw. ein Strom der geforderten Eigenschaften.

Unter gegeneinander verriegelten Ansteuersignalen soll verstanden werden, dass die Ansteuerung des Pulsweitenmodulators zwei Signale derart erzeugt, dass zur Vermeidung von Kurzschlüssen immer nur einer der beiden Schalter geschlossen ist.

Es gibt auch Ausgestaltungen von Wandlerprinzipien mit konstantem Wert der Verriegelungszeit zwischen den beiden Leistungsschaltern der Halbbrücke, dies sind z.B. Resonanzwandler.

Resonanzwandler arbeiten mit sehr hohen Schaltfrequenzen bei gleichzeitig geringen Schaltverlusten. Sie steuern die zu transformierende Leistung bzw. ihre Ausgangsspannung durch eine Änderung der Schaltfrequenz. Diese Schaltfrequenz wird in der Regel durch einen VCO (voltage controlled oscillator) erzeugt.

Bei Ausführungen nach dem Stand der Technik befindet sich dieser VCO auf einem ruhenden Potenzial, die von ihm erzeugten Schaltsignale werden über eine geeignete Signal- und Potenzialtrennung auf die Leistungsschalter bzw. deren Treiber übertragen. Diese Anordnung wird allem dann verwendet, wenn die Zwischenkreisspannung der Halbbrücke eine höhere Spannung als die zugehörige Oszillatorschaltung aufweist.

Zum Stand der Technik zählt hier die DE 33 11 662, in der eine Schaltungsanordnung zur Verwendung in einem elektromagnetischen Strömungsmesser vorgesehen ist. Diese Schaltungsanordnung erfüllt nicht die Anforderungen dieser Erfindung, stellt allerdings eine Halbbrückenanordnung mit konstanter Verriegelungszeit vor.

Zum Stand der Technik zählt weiterhin das Japanische Patent JP 63253720: Hierin wird eine Anordnung vorgestellt, in der ein Treiber eine Halbbrücke, bestehend aus einem N-Kanal und einem P- Kanal- IGBT ansteuert. Diese Anordnung weist ein Bezugspotenzial des Gate- Treibers auf, das zeitlich nicht konstant, sondern gleich dem Potenzial der Ausgangsspannung der Halbbrücke ist. Durch die Verwendung eines N- Kanal TOP-Schalters sowie eines P- Kanal BOT- Schalters, welche beide gemeinsam von nur einem Gate- Treiber angesteuert werden, wird einerseits eine sehr kurze Verriegelungszeit sowie eine sichere Verriegelung erzielt. Dem Treiber wird das Schaltsignal über einen Optokoppler zugeführt, der die Aufgabe der Signal bzw. Potenzialtrennung übernimmt.

Im Falle eines Resonanzwandlers sind vergleichsweise hohe Schaltfrequenzen zu übertragen, die Realisierung dieser Signal- bzw. Potenzialtrennung für das Schaltsignal ist daher schwierig und aufwendig.

Der Erfindung liegt die Aufgabe zugrunde einen schaltenden Spannungsumformer in Halbbrückentopologie mit konstanter Verriegelungszeit und geringem schaltungstechnischen Aufwand für die Ansteuerung der Halbbrücke vorzustellen.

Die Aufgabe wird erfindungsgemäß gelöst, durch die Merkmale des Anspruchs 1. Bevorzugte Ausführungsformen sind in den Unteransprüchen beschrieben.

Im Gegensatz zum Stand der Technik wird bei der erfinderischen Lösung für die das Schaltsignal erzeugende Schalteinheit (Oszillatorschaltung) das gleiche Versorgungs- bzw.

Bezugspotenzial gewählt wie für die Treiberschaltung. Somit hat die Oszillatorschaltung kein festes Bezugspotenzial. Vielmehr variiert das Bezugspotenzial des Oszillators und des Gate- Treibers mit dem Ausgangssignal der Halbbrücke. Durch diese Maßnahme kann der Oszillator direkt mit dem Treiber verbunden werden, eine Signal- bzw. Potenzialtrennung, die das Schaltsignal führt, ist nicht notwendig. Zur Regelung muss ausschließlich ein quasistatisches, d.h. sich langsam änderndes, Steuersignal zur Oszillatorschaltung übertragen werden. Der Schaltungsaufwand bzw. die Anforderungen an das übertragende Bauteil sind somit deutlich geringer, verglichen mit den Anforderungen der Übertragung des im Vergleich hierzu höherfrequenten Schaltsignals der Oszillatorschaltung.

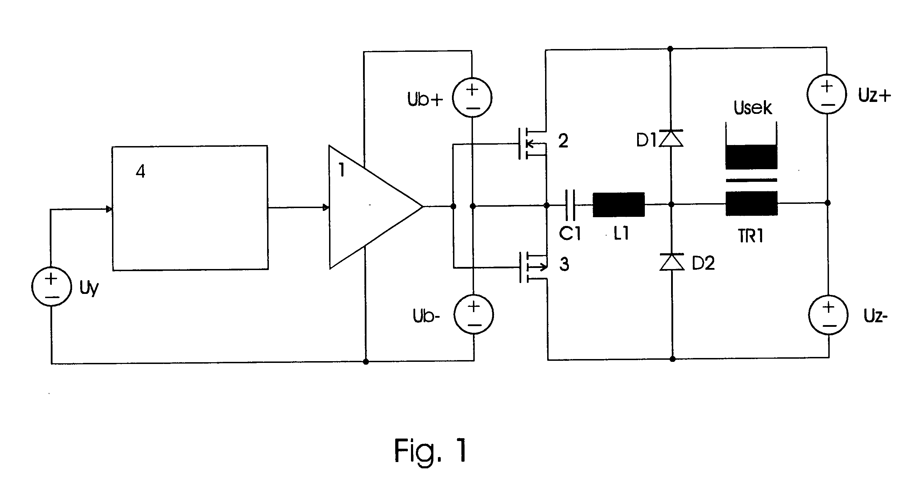

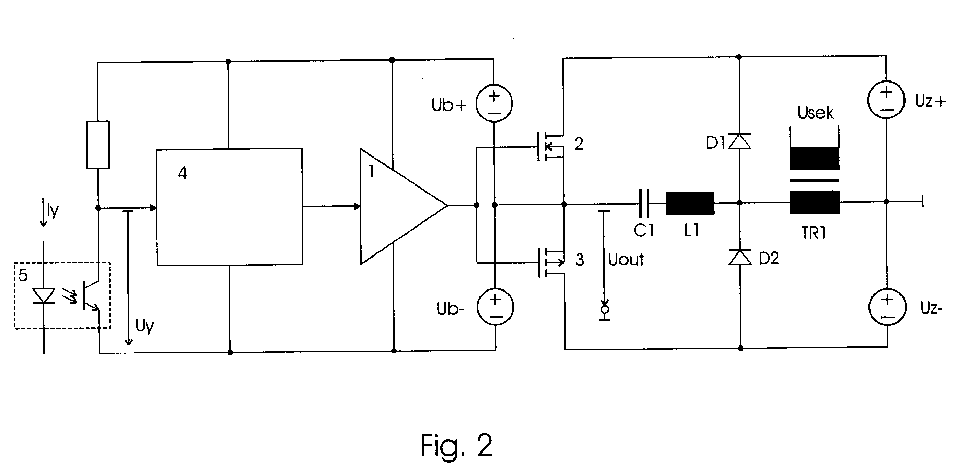

Der erfinderische Gedanke wird anhand der Ausführungsbeispiele in den Figuren 1 und 2 näher erläutert.

Beide Figuren zeigen das Prinzip der erfinderischen Ansteuerung am Beispiel eines primärgetakteten resonanten Schaltnetzteiles.

Fig. 1 zeigt einen Resonanzwandler mit erfinderisch ausgestalteter Ansteuerschaltung und damit vereinfachtem Aufbau. Der VCO (voltage controlled oscillator) 4 erzeugt eine pulsförmige Ausgangsspannung mit einem Tastverhältnis von 50%. Die externe Steuergröße, die beispielhaft durch einen Optokoppler aus dem Ausgangskreis des Resonanzwandlers übertragen wird, wird zur Vereinfachung als Steuerspannung Uy dargestellt. Das Ausgangssignal des VCO 4 wird direkt an den Eingang des einzigen Gate-Treibers 1 angelegt. Bei dem TOP- Schalter 2 handelt es sich um einen N- Kanal MOSFET bei dem BOT- Schalter 3 um einen P- Kanal- MOSFET. Durch diese Schaltungsanordnung wird die Verriegelung der beiden Schalter zueinander durch die Schaltungsanordnung selbst und nicht durch ein zusätzliches Bauteil sichergestellt indem das Ausgangssignal des Gate- Treibers 1 nur einen der beiden Schalter durchschalten kann. Bei High- Pegel ist der TOP- Schalter 2 durchgeschaltet, bei Low- Pegel der BOT- Schalter 3. Das Bezugspotenzial des Gate- Treibers ist somit abhängig von den Schaltzuständen des TOPund BOT- Schalters.

Fig. 2 zeigt eine detailliertere Darstellung des Resonanzwandlers aus Fig. 1. Diese Halbbrücke besteht wiederum aus einem N- Kanal- MOSFET Transistor als TOP- Schalter 2 sowie einem P- Kanal- MOSFET Transistor als BOT- Schalter 3 und wird aus einer Zwischenkreisspannungsversorgung Uz+ / Uz- gespeist. Beide Transistoren werden von einem Gate- Treiber 1, mit einer Spannungsversorgung Ub+ / Ub-, angesteuert. Der Gate-Treiber wiederum erhält Schaltsignale vom spannungsgesteuerten Oszillator (VCO) 4, der ebenfalls von Ub+ und Ub- gespeist wird. Von Bedeutung ist hierbei vor allem, dass der Bezugsspannungspegel des Gate- Treibers 1 und des Oszillators 4, dies ist hier der Verbindungspunkt zwischen den Spannungsquellen Ub+ und Ub- mit den Sourceanschlüssen der Leistungstransistoren verbunden ist. Auf diese Weise ist es möglich die elektronischen Schalter 2 und 3 auch dann zu schalten, wenn die Zwischenkreisspannung Uz+ / Uz- größer als die Treiber- bzw. Oszillatorversorgungsspannung Ub+ / Ub- ist. Da der VCO auf dem gleichen Potenzial wie der Treiber liegt, kann der Ausgang des VCO direkt mit dem Eingang des Treibers verbunden werden, die Verarbeitung hoher Schaltfrequenzen ist daher kein Problem. Die Taktfrequenz des VCO wird durch eine Gleichspannung Uy eingestellt. Uy wird durch den Optokoppler 5 zugeführt. Der Steuerstrom ly wiederum beeinflusst Uy. Da ly und Uy im Verhältnis zum Schaltsignal sehr langsame quasistatische Signale sind, kann ein einfacher träger Optokoppler zum Einsatz kommen, obwohl das Netzteil mit hohen Schaltfrequenzen arbeitet. Durch ly kann die Schaltfrequenz des VCO und damit der Strom durch den Resonanzkreis und somit auch die über den Transformator TR1 übertragene Leistung eingestellt werden. Der Gate- Treiber 1 kennt zwei statische Schaltzustände:
1. eine positive Ausgangsspannung (High- Pegel) zur Ansteuerung (Durchschalten) des TOP- Schalters 2
2. eine negative Ausgangsspannung (Low- Pegel) zur Ansteuerung (Durchschalten) des BOT- Schalters 3.

Da der Gate- Treiber 1 nur zwei Zustände (High- Pegel und Low- Pegel) kennt wird erreicht, dass bei High- Pegel der TOP- Schalter 2 durchgeschalten und gleichzeitig der BOT-Schalter 3 abgeschalten ist. Bei einem Wechsel zum Low- Pegel wird der TOP- Schalter 2 abgeschalten da seine Schaltschwelle unterschritten wird. Sobald die Schaltschwelle des BOT- Schalters 3 erreicht ist (Low- Pegel) wird dieser durchgeschaltet, während der TOP-Schalter 2 weiterhin abgeschalten ist. Bei einem Wechsel vom Low- Pegel zum High- Pegel wird erst der BOT- Schalter 3 abgeschalten da seine Schaltschwelle (negative Spannung) überschritten wird. Sobald die Schaltschwelle (positive Spannung) des TOP- Schalters 2 erreicht ist (High- Pegel) wird dieser durchgeschaltet, während der BOT- Schalter 3 weiterhin abgeschalten ist. Es ist somit ohne zusätzliche Bauelemente sichergestellt, dass zu keinen Zeitpunkt beide Schalter durchgeschaltet sind und ein Brückenkurzschluss vorliegt, die beiden Schalter sind durch die Gestaltung der Schaltung und nicht durch ein Bauelement gegeneinander verriegelt. Zudem ist durch das beschriebene Verfahren sichergestellt, dass der Zeitraum in dem kein Schalter durchgeschalten ist auf die Schaltzeit des Gate- Treibers beschränkt ist.

Durch eine geeignete Wahl von ly kann somit die gewünschte Ausgangsspannung Usek auf der Sekundärseite des Transformators TR1 erzeugt werden.

Das Bezugspotenzial des Gate- Treibers und des VCO liegt bei der vorgestellten Schaltung auf dem Potenzial der Ausgangsspannung der Halbbrücke. Dies bedeutet, dass abhängig von dem Schaltzustand der Halbbrücke das Bezugspotenzial von Gate- Treiber und VCO variiert. Bei High- Pegel liegt das Bezugspotenzial auf Uz+, bei Low- Pegel auf Uz-, während des Umschaltvorgangs zwischen High- und Low- oder Low- und High- folgt das Bezugspotenzial von Treiber und VCO dem Ausgangssignal Uout.

## Patentansprüche

1. Schaltender Spannungsumformer in Halbbrückentopologie mit konstantem Wert der Verriegelungszeit zwischen den beiden Leistungsschaltern in TOP- 2 bzw. BOT-Position 3 sowie einer Ansteuerung, wobei der TOP- Schalter 2 durch einen oder mehrere parallel geschaltete N- Kanal Transistoren realisiert ist, der BOT- Schalter 3 durch einen oder mehrere parallel geschaltete P- Kanal Transistoren realisiert ist, beide Leistungsschalter durch einen Gate- Treiber 1 angesteuert werden sowie das Bezugsund Versorgungsspannungspotenzial des Gate- Treibers 1 und der den Gate- Treiber 1 steuernden Schalteinheit 4 sich auf dem im Betrieb variierenden, nicht konstanten, Potenzial des Ausgangssignals Uout der Halbbrücke befinden.

2. Spannungsumformer nach Anspruch 1, **dadurch gekennzeichnet, dass** das potenzialtrennende Bauelement 5 ein quasistatisches Steuersignal führt.

3. Spannungsumformer nach Anspruch 1, **dadurch gekennzeichnet, dass** als Leistungsschalter 2,3 IGBT (insulated gate bipolar transistor) oder MOSFET-Transistoren eingesetzt werden.
